# EUROPÄISCHE PATENTSCHRIFT

(11) **EP 3 724 513 B1**
(45) Veröffentlichungstag und Bekanntmachung des Hinweises auf die Patenterteilung: **15.06.2022**
(21) Anmeldenummer: 19702197.5
(22) Anmeldetag: 18.01.2019
(51) Int. Cl.: F15B 1/24, F15B 20/00

(54) **KOLBENSPEICHER**
PISTON ACCUMULATOR
ACCUMULATEUR À PISTON

(30) Priorität: 09.02.2018 DE 102018001104
(43) Veröffentlichungstag der Anmeldung: 21.10.2020
(73) Patentinhaber: Hydac Technology GmbH, 66280 Sulzbach (DE)
(72) Erfinder: ALBERT, Alexander, 66798 Wallerfangen (DE); LANG, Dennis Christopher, 66386 St. Ingbert (DE)
(74) Vertreter: Bartels und Partner, Patentanwälte
(86) Internationale Anmeldenummer: PCT/EP2019/051200
(87) Internationale Veröffentlichungsnummer: WO 2019/154607

(56) Entgegenhaltungen:
- DE-B3-102013 010 344
- DE-C- 967 721

## Beschreibung

Die Erfindung betrifft einen Kolbenspeicher, mit einem Speichergehäuse und einem darin längsverfahrbar geführten Trennkolben, der eine Flüssigkeitsseite von einer Gasseite im Speichergehäuse separiert, wobei trotz einer Kolbendichtung an dem Trennkolben ungewollt Flüssigkeit von der Flüssigkeitsseite auf die Gasseite übertritt, wobei der Trennkolben zur Vergrößerung des Volumens der Gasseite die Form einer Schale hat, deren innerer Hohlraum sich vom Kolbenboden mit seinem offenen Ende bis zum Kolbenende an der Gasseite erstreckt.

Derartige Kolbenspeicher sind Stand der Technik und kommen als hydropneumatische Druckspeicher in hydraulischen Kreisläufen häufig zum Einsatz, beispielsweise bei hydraulischen Bremssystemen, Hydrolenkungen, Federungssystemen oder dergleichen, etwa zur Glättung von Druckschwankungen. Diesbezüglich zeigt die DE 10 2014 010 006 A1 ein Beispiel eines als Pulsationsdämpfer dienenden Kolbenspeichers der eingangs genannten Gattung.

Durch DE 967 721 C ist ein Zylinder mit einem Trennkolben, insbesondere für einen Druckspeicher in hydraulischen Anlagen bekannt, bei dem um diesen Kolben herum, mindestens ein zwischen elastischen Dichtungen liegender Ringraum angeordnet ist, dessen Druck mindestens zeitweise von den im Zylinder herrschenden Drücken abweicht und der über ein einseitig sperrendes Mittel mit einem Druckraum verbunden ist, wobei der Druck dieses Druckraumes mindestens zeitweise unter dem für den Ringraum vorgesehenen Mindestdruck liegt und wobei der im Ringraum mit Hilfe des die Verbindung in Richtung zum Ringraum hin sperrenden Mittels über dem Atmosphärendruck gehalten wird.

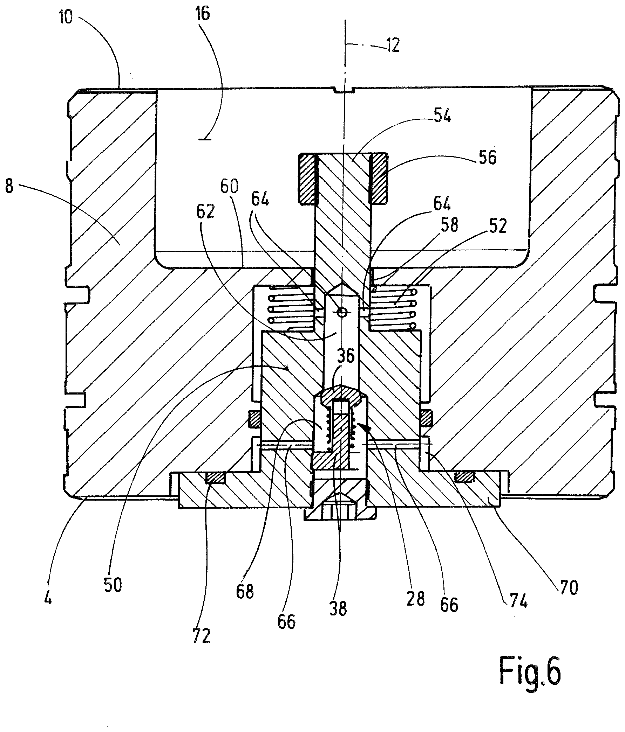

Durch DE 10 2013 010 344 B3 ist ein Druckspeicher für eine Kraftstoffeinspritzung bekannt, der mindestens einen Trennkolben aufweist, welcher in einem Druckspeichergehäuse axial verschieblich, zwischen einem Gasraum und einem Kraftstoffraum im Druckspeichergehäuse aufgenommen ist, wobei der Kraftstoffraum einen Kraftstoffeinlass und einen Kraftstoffauslass aufweist und wobei der Gasraum über einen Einlass nachbefüllbar ist. Bei bei einer Ausführungsform gemäß Fig. 6 sind der Gasraum und der Kraftstoffraum durch zwei unabhängige Trennkolben voneinander separiert, wobei zwischen den beiden Trennkolben ein volumenvariabler Zwischenraum definiert ist, welcher dem Sammeln von Gas- und Flüssigleckage dient, mit einem Muldenvolumen als Sammelreservoir, aus dem mittels eines federbelasteten Rückschlagventiles die genannte Gas- und Flüssigleckage gemeinsam in den Kraftstoffraum rückführbar ist.

Für die Anwendung auf diesen Gebieten ist eine Grundvoraussetzung, dass eine lange, störungsfreie Betriebslebensdauer erreichbar ist. Diesem Ziel steht jedoch das in der Praxis nicht vollständig vermeidbare, ungewollte Übertreten von Hydraulikflüssigkeit zur Gasseite hin entgegen. Dies führt dazu, dass sich der für die effiziente Wirkung des Kolbenspeichers erforderliche Verlauf der Druck/Volumen-Kennlinie aufgrund der übergetretenen Flüssigkeit verschlechtert, so dass die einwandfreie Funktion zeitlich begrenzt ist.

Im Hinblick auf diese Problematik stellt sich die Erfindung die Aufgabe, einen Kolbenspeicher zur Verfügung zu stellen, der eine lange, störungsfreie Betriebslebensdauer gewährleistet.

Erfindungsgemäß ist diese Aufgabe durch einen Kolbenspeicher gelöst, der die Merkmale des Patentanspruchs 1 in seiner Gesamtheit aufweist. Gemäß dem kennzeichnenden Teil des Anspruchs 1 besteht eine wesentliche Besonderheit der Erfindung darin, dass mittels eine Rückführeinrichtung die übergetretene Flüssigkeit von der Gasseite des Speichergehäuses auf die Flüssigkeitsseite desselben zumindest teilweise rückgeführt ist. Dadurch, dass zumindest eine ins Gewicht fallende Veränderung des freien Gasvolumens der Gasseite im Betrieb verhindert ist und der optimale Verlauf der Druck/Volumen-Kennlinie erhalten bleibt, ist ein störungsfreier Betrieb des erfindungsgemäßen Kolbenspeichers über lange Zeiträume hinweg gewährleistet.

Bei vorteilhaften Ausführungsbeispielen weist die Rückführeinrichtung einen in einer Führung des Trennkolbens längsverfahrbar geführten Schwimmer auf, der unter dem Einfluss der Flüssigkeit auf der Gasseite des Speichergehäuses aufschwimmend einen Weg zu einem Rückschlagventil freigibt, das im geöffneten Zustand eine Verbindung zwischen dieser Führung und der Flüssigkeitsseite im Speichergehäuse freigibt. Bei einer Einstellung des Rückschlagventils derart, dass es bei einem Druck der Gasseite öffnet, der den Druck der Flüssigkeitsseite um einen vorzugsweise geringen Differenzdruck Δp übersteigt, erfolgt ein Rückführvorgang in automatischem Betrieb, sobald, wie beim Anlaufen des Trennkolbens an einem Abschlussdeckel des Speichergehäuses, kein Druckgleichgewicht zwischen Gasseite und Flüssigkeitsseite herrscht und die Schwimmerkugel durch auf der Gasseite befindliche Hydraulikflüssigkeit aufgeschwommen ist und dadurch den Weg zum Rückschlagventil freigibt.

Mit Vorteil ist die Anordnung hierbei so getroffen, dass die Führung für den Schwimmer zur Gasseite des Speichergehäuses hin mit einer Sperre für den Schwimmer verschlossen ist, die flüssigkeitsdurchlässig ist. Dadurch ist verhindert, dass die Schwimmerkugel aus der Führung ausschwimmen kann.

Der Schwimmer kann eine Schwimmerkugel sein oder aus einer Schwimmerplatte bestehen, die sich bei Bewegung in Richtung des Rückschlagventils an einer Flüssigkeitsdurchlässe aufweisenden weiteren Sperre abstützt und diese Flüssigkeitsdurchlässe verschließt.

Bei einem abgewandelten Ausführungsbeispiel weist die Rückführeinrichtung einen in dem Trennkolben bewegbar geführten Steuerkolben auf, der eine innere, von übergetretener Flüssigkeit füllbare Kammer aufweist und der durch die Wirkung eines Energiespeichers in eine geöffnete Stellung bewegbar ist, in der die Kammer über ein in Richtung der Gasseite sperrendes Rückschlagventil mit der Flüssigkeitsseite in Verbindung ist.

Um einen druckfesten Verschluss der Gasseite zur Flüssigkeitsseite hin zu gewährleisten, wenn auf der Gasseite ein hoher Drucküberschuss herrscht, wenn beispielsweise die Flüssigkeitsseite drucklos ist, ist bei dem vorstehend genannten Ausführungsbeispiel die Anordnung so getroffen, dass der Steuerkolben durch Anlaufen am Abschlussdeckel gegen die Wirkung des Energiespeichers aus der geöffneten Stellung heraus in eine Stellung verschiebbar ist, in der ein am Steuerkolben befindliches Schließelement die Verbindung zwischen Füllkammer und Flüssigkeitsseite sperrt.

Bei einem weiteren vorteilhaften Ausführungsbeispiel weist die Rückführeinrichtung einen Betätigungskolben auf, der entgegen der Wirkung eines zugehörigen Energiespeichers bei Druckbeaufschlagung zumindest ein im Trennkolben geführtes Rückschlagventil ansteuert.

Mit Vorteil ist die Anordnung hierbei so getroffen, dass das jeweilige Rückschlagventil im Trennkolben einen federbelasteten Steuerpin aufweist, der beim Anfahren des Trennkolbens an den Abschlussdeckel des Speichergehäuses von dem druckbeaufschlagten Betätigungskolben aufsteuerbar ist.

Das auf der Gasseite des Speichergehäuses angesammelte Flüssigkeitsvolumen ist hierbei mittels einer Sensoreinrichtung feststellbar, die ab einem vorgebbaren Grenzvolumen an Flüssigkeit ein Steuerventil derart ansteuert, dass es die Druckbeaufschlagung für den Betätigungskolben der Rückführeinrichtung freigibt, so dass die Rückführung über das geöffnete Rückschlagventil stattfindet.

Nachstehend ist die Erfindung anhand von in der Zeichnung dargestellten Ausführungsbeispielen im Einzelnen erläutert.

Es zeigen:
- Fig. 1 und 2: Längsschnitte des Trennkolbens eines ersten Ausführungsbeispiels des erfindungsgemäßen Kolbenspeichers, wobei ein erster Betriebszustand bzw. ein zweiter Betriebszustand der Rückführeinrichtung dargestellt ist;
- Fig. 3 und 4: den Fig. 1 und 2 entsprechende Längsschnitte des Trennkolbens eines zweiten Ausführungsbeispiels, wobei der erste Betriebszustand bzw. der zweite Betriebszustand der Rückführeinrichtung dargestellt ist;
- Fig. 5 und 6: entsprechende Darstellungen des Trennkolbens eines dritten Ausführungsbeispiels, wobei der erste Betriebszustand bzw. der zweite Betriebszustand der Rückführeinrichtung dargestellt ist; und
- Fig. 7 und 8: Längsschnitte des der Flüssigkeitsseite benachbarten Teils des Speichergehäuses eines vierten Ausführungsbeispiels der Erfindung, wobei der erste Betriebszustand bzw. der zweite Betriebszustand der Rückführeinrichtung dargestellt ist.

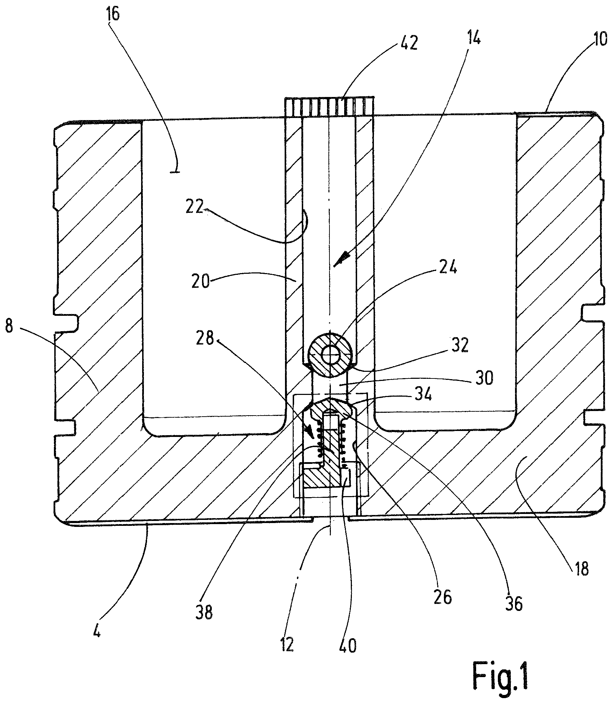

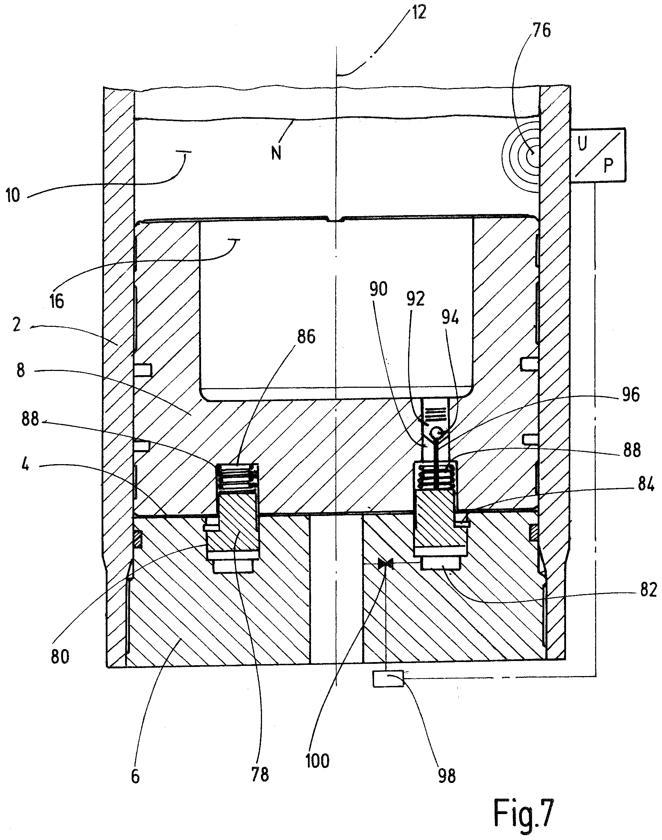

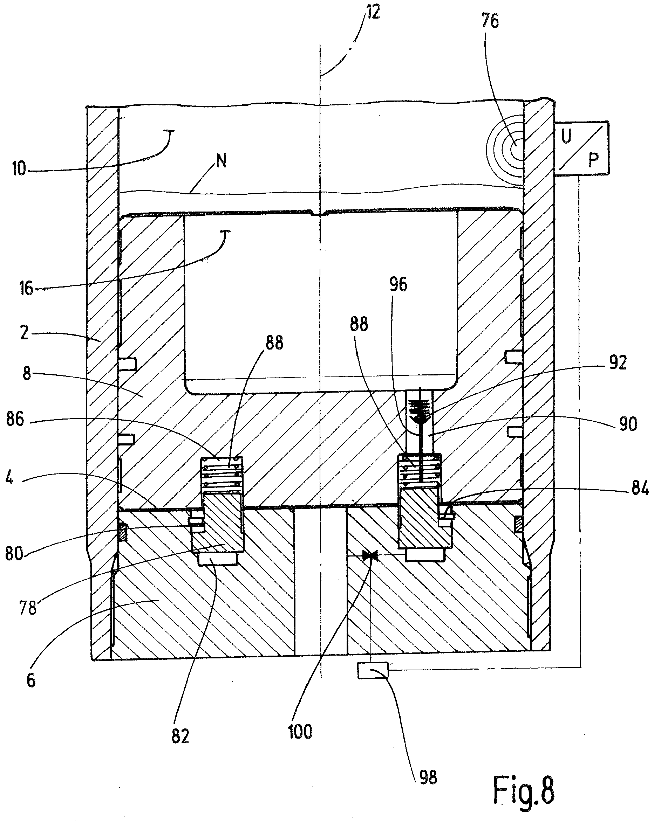

Von den in der Zeichnung dargestellten Ausführungsbeispielen des erfindungsgemäßen Kolbenspeichers ist lediglich in Fig. 7 und 8 vom Speichergehäuse 2 ein Endbereich dargestellt, an dem sich ein den Gehäuseabschluss an der Flüssigkeitsseite 4 bildender Abschlussdeckel 6 befindet, wobei sich ein im Speichergehäuse 2 frei verschiebbar geführter Trennkolben 8, der die Flüssigkeitsseite 4 von einer Gasseite 10 separiert, in einer am Deckel 6 anliegenden Endstellung gezeigt ist. In den übrigen Fig. 1 bis 6 ist jeweils der Trennkolben 8 in gesonderter Darstellung ohne die zugehörigen Gehäuseteile gezeigt.

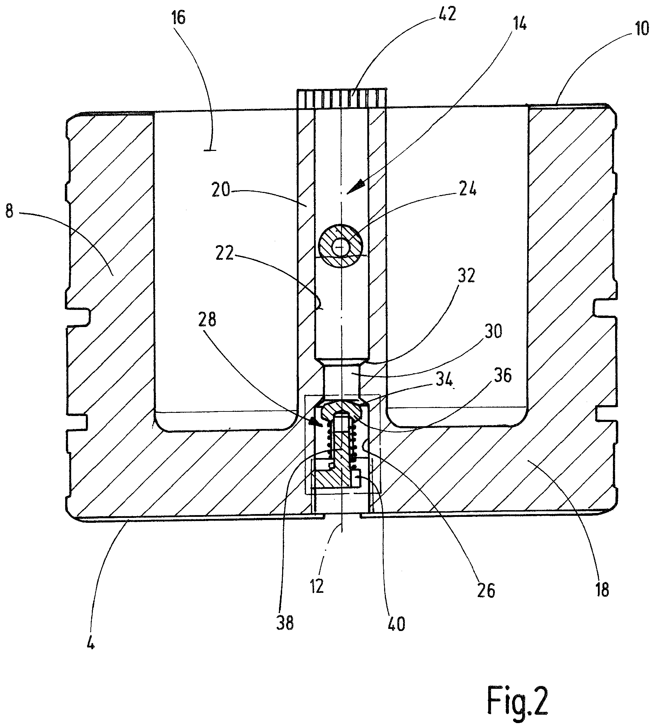

Die Fig. 1 und 2 zeigen ein erstes Ausführungsbeispiel, bei dem der Trennkolben 8 einen zur Zylinderachse 12 koaxialen Durchgang 14 aufweist, in dem sich die Rückführeinrichtung befindet. Wie bei Kolbenspeichern üblich, hat der Trennkolben 8 zur Vergrößerung des Volumens der Gasseite 10 die Form einer Schale, deren innerer Hohlraum 16 sich vom in der Zeichnung untenliegenden Kolbenboden 18 mit seinem offenen Ende bis zum Kolbenende an der Gasseite 10 erstreckt. Der Durchgang 14 für die Rückführeinrichtung befindet sich in einem vom Kolbenboden 18 bis zum gasseitigen Kolbenende verlaufenden, zur Achse 12 koaxialen Rohrkörper 20. Der Durchgang 14 ist durch eine im Innendurchmesser gestufte Bohrung gebildet, mit einem vom gasseitigen Kolbenende ausgehenden ersten Abschnitt, der eine Führung 22 für eine Schwimmerkugel 24 bildet, einem zweiten Abschnitt, der vom Ende am Kolbenboden 18 ausgeht, den gleichen Durchmesser wie die Führung 22 besitzt und ein Ventilgehäuse 26 für ein Standard-Rückschlagventil 28 bildet. Zwischen der Führung 22 und dem Ventilgehäuse 26 befindet sich ein einen verringerten Innendurchmesser aufweisender Zwischenabschnitt 30. Dieser bildet an dem der Führung 22 zugewandten Ende einen Dichtsitz 32 für die Zusammenwirkung mit der Schwimmerkugel 24 und an dem dem Ventilgehäuse 26 zugewandten Ende einen Dichtsitz 34 für den federbelasteten Schließkörper 36 des Rückschlagventils 28. Der Ventilkörper 36 ist an einer Halterung 38 geführt, die im Ventilgehäuse 36 einen Durchlass 40 freilässt, durch den bei geöffnetem Rückschlagventil 28 Rückführflüssigkeit durchtreten kann.

Die Fig. 1 zeigt den Betriebszustand ohne im Hohlraum 16 des Trennkolbens 8 angesammelte, übergetretene Flüssigkeit, wobei die Schwimmerkugel 24 nicht aufgeschwommen ist, sondern am Dichtsitz 32 am Zwischenabschnitt 30 anliegt. Damit die Schwimmerkugel 24 bei zur Gasseite 10 übergetretener Flüssigkeit, wie Hydrauliköl, aufschwimmt, ist die beispielsweise aus Titan oder aus Kunststoff bestehende, beispielsweise mittels 3D-Druck hergestellte Schwimmerkugel 24 als Hohlkugel ausgeführt. Fig. 2 zeigt eine Position der aufgeschwommenen Schwimmerkugel 24, die von ihrem Dichtsitz 32 abgehoben ist. Bei einer Druckdifferenz Δp zwischen der Gasseite 10 und der Flüssigkeitsseite 4 an der Außenseite des Kolbenbodens 28 ist dadurch der Ventilkörper 36 des Rückschlagventils 28 druckbeaufschlagt, so dass das vorzugsweise auf einen geringen Öffnungsdruck eingestellte Rückschlagventil 28 öffnet und dadurch die Flüssigkeit aus der Gasseite über die Führung 22 zur Gasseite 4 zurückströmt. Um zu verhindern, dass die aufgeschwommene Schwimmerkugel 24 aus der Führung 22 ausschwimmt, ist eine Flüssigkeitsdurchlässe aufweisende Kunststoffplatte 42 mit dem Ende des Rohrkörpers 20 verklebt oder verschraubt oder sonst wie verbunden. Um einen Rückführvorgang einzuleiten und für das Öffnen des Rückschlagventils einen Drucküberschuss auf der Gasseite zu bewirken, wird der Druck der Flüssigkeitsseite 4 verringert, so dass der Trennkolben 8 an dem (nur in Fig. 7 und 8 gezeigten) Gehäuse-Abschlussdeckel 6 anläuft.

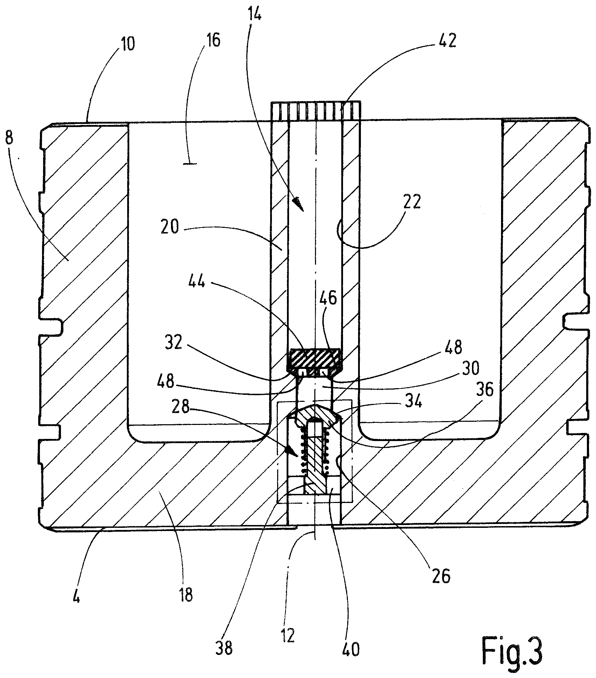

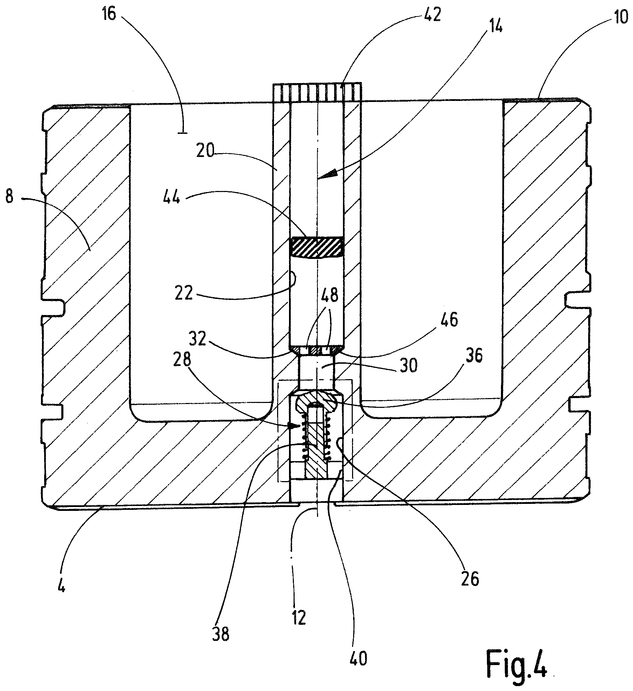

Das in Fig. 3 und 4 dargestellte zweite Ausführungsbeispiel entspricht dem ersten Ausführungsbeispiel, abgesehen davon, dass anstelle der Schwimmerkugel 24 in der Führung 22 als Schwimmkörper eine Gummimatte 44 vorgesehen ist, die, wie in Fig. 4 gezeigt, bei Anwesenheit von Flüssigkeit aufschwimmt, und dass die Gummimatte 44 bei Fehlen von Flüssigkeit nicht unmittelbar an dem Dichtsitz 32 anliegt, der an der Verengung des Zwischenabschnitts 30 des Durchgangs 14 gebildet ist, sondern an einem eine Gegen- oder Dichtfläche bildenden Teller 46 aus Kunststoff oder Stahl, der Flüssigkeitsdurchlässe 48 aufweist. Die einen Schwimmkörper bildende Gummimatte 44 dichtet bei fehlender Flüssigkeit durch Anlage am Teller 46 die Durchlässe 48 ab, so dass die Funktionsweise des zweiten Ausführungsbeispiels derjenigen des ersten Ausführungsbeispiels entspricht.

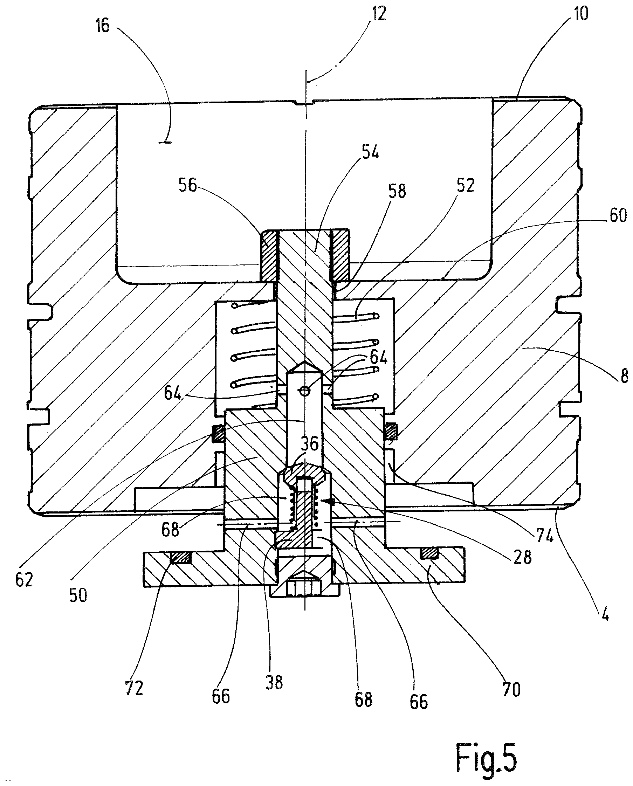

Bei dem in Fig. 5 und 6 dargestellten dritten Ausführungsbeispiel weist die Rückführeinrichtung einen im Trennkolben 8 in Axialrichtung bewegbar geführten Steuerkolben 50 auf, der durch eine Druckfeder 52 in eine in Richtung der Flüssigkeitsseite 4 ausgefahrene Endstellung vorgespannt ist. Zur Begrenzung der Ausfahrbewegung in der in Fig. 5 dargestellten Endstellung ist am kolbenstangenartigen Endteil 54 des Steuerkolbens 50, das sich durch einen Durchgang 58 in den inneren Hohlraum 16 des Trennkolbens 8 erstreckt, ein ringförmiger Sperrkörper 56 angebracht, der sich als Anschlag am Boden 60 des Hohlraums 16 abstützt. Im Steuerkolben 50 befindet sich eine zur Achse 12 koaxiale Füllkammer 62. Über den Durchgang 58 und Querbohrungen 64 des Kolbens 50 ist die Füllkammer 62 aus dem Hohlraum 16 mit übergetretener Flüssigkeit füllbar. Im Steuerkolben 50 befinden sich Querkanäle 66, die zwischen der Außenseite des Kolbens und dem der Flüssigkeitsseite 4 zugewandten Endbereich 68 der Füllkammer 62 verlaufen. Wie bei den beiden ersten Ausführungsbeispielen ist das Standard-Rückschlagventil 28, das in Richtung der Flüssigkeitsseite 4 sperrt, als ein durch Differenzdruck öffenbares Sperrelement vorgesehen, das normalerweise die Verbindung zwischen den zur Kolbenaußenseite führenden Querkanälen 66 und dem der Gasseite 10 zugewandten Teil der Füllkammer 62 sperrt. Die Fig. 5 zeigt die durch die Wirkung der Druckfeder 52 verschobene Position des Steuerkolbens 50, die der geöffneten Stellung entspricht, bei der die Querkanäle 66 zur Flüssigkeitsseite 4 hin frei sind. Um einen Rückführvorgang einzuleiten, wird der Flüssigkeitsdruck der Flüssigkeitsseite 4 gegenüber dem Gasdruck auf der Gasseite 10 in einem Maße verringert, dass sich der Trennkolben 8 in eine Position bewegt, bei der der Steuerkolben 50 an den Abschlussdeckel 6 anläuft und der Steuerkolben 50 dadurch gegen die Wirkung der Druckfeder 52 geringfügig aus der voll ausgefahrenen Stellung von Fig. 5 eingeschoben wird. Bei der sich aufgrund der Abstützung durch die Druckfeder 52 erzeugten Druckdifferenz zwischen Gasseite 10 und Flüssigkeitsseite 4 öffnet das auf einen geringen Schließdruck eingestellte Rückschlagventil 28, so dass der Rückführvorgang einsetzt und Flüssigkeit aus dem Hohlraum 16 über den Durchgang 58, die Füllkammer 62 und die Querkanäle 66 zur Flüssigkeitsseite 4 rückströmt. Um bei drucklosem Zustand der Flüssigkeitsseite 4, bei dem der Trennkolben 8 unter dem gesamten Gasdruck der Gasseite 10 am Abschlussdeckel 6 anliegt und der Steuerkolben 50, wie in Fig. 6 gezeigt, vollständig eingefahren ist, gelangt ein am Steuerkolben 50 flanschartig auskragendes Schließelement 70 mit einem Dichtring 72 in abdichtende Anlage am Trennkolben 8. Dadurch ist bei druckloser Flüssigkeitsseite 4 ein Gasverlust aus der Gasseite 10 vermieden. Wie die Fig. 5 und 6 zeigen, weist die Führung des Steuerkolbens 50 eine Erweiterung 74 auf, so dass die Eingänge der Querbohrungen 66 auch bei eingeschobenem Steuerkolben 50 frei sind. Die Verbindung zwischen Gasseite 10 und Flüssigkeitsseite 4 ist daher erst bei voll eingeschobenem Steuerkolben 50 durch abdichtende Anlage des Schließelements 70 am Trennkolben 8 unterbunden.

Die Fig. 7 und 8, in denen ein viertes Ausführungsbeispiel der Erfindung dargestellt ist, zeigen vom Kolbenspeicher einen unteren Abschnitt des Speichergehäuses 2 mit daran angebrachtem Abschlussdeckel 6, der den Abschluss der Flüssigkeitsseite 4 bildet. Diese Teile sind in den Fig. 1 bis 6, die lediglich den Trennkolben 8 zeigen, weggelassen. Bei dem Ausführungsbeispiel von Fig. 7 und 8 weist die Rückführeinrichtung einen als Ringkörper ausgebildeten Betätigungskolben 78 auf, der in einem Ringraum 80 des Abschlussdeckels 6 axial verfahrbar ist, der einen an die innere Kolbenfläche angrenzenden Druckraum 82 bildet. In dem Ringraum 80 ist der Betätigungskolben 78 durch Druckbeaufschlagung des Druckraums 82 aus dem Abschlussdeckel 6 heraus in eine Endstellung ausfahrbar, die durch einen Anschlag 84 begrenzt ist. Gegen die Ausfahrbewegung ist der Betätigungskolben 78 durch Druckfedern 88 abgestützt, die sich in einer ringförmigen Vertiefung 86 im zugewandten Ende des Ringkolbens 8 befinden. Wie in Fig. 7 und 8 gezeigt, ist im Trennkolben 8 zumindest ein Verbindungskanal 90 gebildet, der vom Kolbenhohlraum 16 in die Vertiefung 86 führt, und in dem ein in die Schließstellung federvorgespanntes Rückschlagventil 92 angeordnet ist. Dessen Schließkörper 94 ist am Ende eines Steuerpins 96 befestigt, der sich in die Vertiefung 86 erstreckt und dabei die in dieser befindliche Druckfeder 88 durchgreift. Beim Zustand von Fig. 7, in der der Rückführzustand dargestellt ist, stützt sich der Steuerpin 96 am Betätigungskolben 78 ab, weil dieser durch Druckbeaufschlagung des Druckraums 82 gegen die Wirkung der Druckfedern 88 bis zur Anlage am Anschlag 84 ausgefahren ist. Dadurch ist der Steuerpin 96 gegen die Wirkung der Schließfeder des Rückschlagventils 92 verschoben, so dass dieses geöffnet ist. Die Fig. 8 zeigt demgegenüber den Betriebszustand, bei dem der Druckraum 82 entlastet ist, so dass der Betätigungskolben 78 durch die Druckfedern 88 in den Abschlussdeckel 6 eingefahren ist, der Steuerpin 96 dadurch nicht mehr abgestützt ist und daher das Rückschlagventil 92 geschlossen ist.

Zur Feststellung des Niveaus N von auf die Gasseite 10 übergetretener Flüssigkeit ist am Speichergehäuse 2 ein Ultraschallsensor 76 vorgesehen, der über einen UP-Schalter den Flüssigkeitsstand an eine Schaltelektronik 98 signalisiert, die ein Steuerventil 100 ansteuert. Bei einem Niveau N angesammelter Flüssigkeit auf der Gasseite, wie es in Fig. 7 verdeutlicht ist, generiert der Sensor 76 für die Schaltelektronik 98 ein Signal, dass ein Rückführvorgang einzuleiten ist. Hierfür öffnet das Steuerventil 100, so dass der Druckraum 82 mit dem Druck der Flüssigkeitsseite 4 versorgt wird, der Betätigungskolben 78 druckbeaufschlagt wird und in die in Fig. 7 gezeigte Position ausfährt. Das Steuerventil 100 wird nun geschlossen, so dass der Betätigungskolben 78 druckbeaufschlagt bleibt. Durch Absenken des Drucks der Flüssigkeitsseite 4 und dadurch dem Anlaufen des Trennkolbens 8 am Abschlussdeckel 6 stützt sich der Steuerpin 96 des Rückschlagventils 92 am Betätigungskolben 78 ab und steuert dadurch das Rückschlagventil 92 in die Offenstellung, so dass Flüssigkeit über den Kanal 90 und die Vertiefung 86 zur Flüssigkeitsseite 4 rückströmt. Sobald der Sensor 76 keine Flüssigkeit mehr signalisiert, wird das Steuerventil 100 wieder geöffnet, so dass der Druckraum 82 entlastet wird, der Betätigungskolben 78 durch die Wirkung der Druckfedern 88 wieder einfährt, der Steuerpin 96 dadurch entlastet ist und das Rückschlagventil 92 wieder schließt. Nach Abschluss dieses Rückführvorgangs kann der Kolbenspeicher wieder für einen folgenden Betriebszyklus betrieben werden. In den Fig. 7 und 8 ist lediglich je ein Kanal 90 mit je einem Rückschlagventil 92 gezeigt. Es könnten jedoch mehr als ein Rückschlagventil 92 in einem zugeordneten Kanal 90 im Trennkolben 8 vorgesehen sein.

## Patentansprüche

1. Kolbenspeicher, mit einem Speichergehäuse (2) und einem darin längsverfahrbar geführten Trennkolben (8), der eine Flüssigkeitsseite (4) von einer Gasseite (10) im Speichergehäuse (2) separiert, wobei trotz einer Kolbendichtung an dem Trennkolben (8) ungewollt Flüssigkeit von der Flüssigkeitsseite (4) auf die Gasseite (10) übertritt, wobei der Trennkolben (8) zur Vergrößerung des Volumens der Gasseite (10) die Form einer Schale hat, deren innerer Hohlraum (16) sich vom Kolbenboden (18) mit seinem offenen Ende bis zum Kolbenende an der Gasseite (10) erstreckt, **dadurch gekennzeichnet, dass** mittels einer Rückführeinrichtung (28; 92) die übergetretene Flüssigkeit von der Gasseite (10) des Speichergehäuses (2) auf die Flüssigkeitsseite (4) desselben zumindest teilweise rückgeführt ist.

2. Kolbenspeicher nach Anspruch 1, **dadurch gekennzeichnet, dass** die Rückführeinrichtung einen in einer Führung (22) des Trennkolbens (8) längsverfahrbar geführten Schwimmer (24; 44) aufweist, der unter dem Einfluss der Flüssigkeit auf der Gasseite (10) des Speichergehäuses (2) aufschwimmend einen Weg zu einem Rückschlagventil (28) freigibt, das im geöffneten Zustand eine Verbindung zwischen dieser Führung (22) und der Flüssigkeitsseite (4) im Speichergehäuse (2) freigibt.

3. Kolbenspeicher nach Anspruch 2, **dadurch gekennzeichnet, dass** die Führung (22) für den Schwimmer (24; 44) zur Gasseite (10) des Speichergehäuses (2) hin mit einer Sperre (42) für den Schwimmer (24; 44) verschlossen ist, die flüssigkeitsdurchlässig ist.

4. Kolbenspeicher nach Anspruch 2 oder 3, **dadurch gekennzeichnet, dass** der Schwimmer eine Schwimmerkugel (24) ist oder aus einer Schwimmerplatte (44) besteht, die sich bei Bewegung in Richtung des Rückschlagventils (28) an einer Flüssigkeitsdurchlässe (48) aufweisenden weiteren Sperre (46) abstützt und diese Flüssigkeitsdurchlässe (48) verschließt.

5. Kolbenspeicher nach Anspruch 1, **dadurch gekennzeichnet, dass** die Rückführeinrichtung einen in dem Trennkolben (8) bewegbar geführten Steuerkolben (50) aufweist, der eine innere, von übergetretener Flüssigkeit füllbare Kammer (62) aufweist und der durch die Wirkung eines Energiespeichers (52) in eine geöffnete Stellung bewegbar ist, in der die Kammer (62) über ein in Richtung der Gasseite (10) sperrendes Rückschlagventil (28) mit der Flüssigkeitsseite (4) in Verbindung ist.

6. Kolbenspeicher nach Anspruch 5, **dadurch gekennzeichnet, dass** der Steuerkolben (50) durch Anlaufen am Abschlussdeckel (6) gegen die Wirkung des Energiespeichers (52) aus der geöffneten Stellung heraus in eine Stellung verschiebbar ist, in der ein am Steuerkolben (50) befindliches Schließelement (70, 72) die Verbindung zwischen Füllkammer (62) und Flüssigkeitsseite (4) sperrt.

7. Kolbenspeicher nach Anspruch 1, **dadurch gekennzeichnet, dass** die Rückführeinrichtung einen Betätigungskolben (78) aufweist, der entgegen der Wirkung eines zugehörigen Energiespeichers (88) bei Druckbeaufschlagung zumindest ein im Trennkolben (8) geführtes Rückschlagventil (92) ansteuert.

8. Kolbenspeicher nach Anspruch 7, **dadurch gekennzeichnet, dass** das jeweilige Rückschlagventil (92) im Trennkolben (8) einen federbelasteten Steuerpin (96) aufweist, der beim Anfahren des Trennkolbens (8) an den Abschlussdeckel (6) des Speichergehäuses (2) von dem druckbeaufschlagten Betätigungskolben (78) aufsteuerbar ist.

9. Kolbenspeicher nach Anspruch 7 oder Anspruch 8, **dadurch gekennzeichnet, dass** mittels einer Sensoreinrichtung (76) das Flüssigkeitsvolumen auf der Gasseite (10) des Speichergehäuses (2) feststellbar ist, die ab einem vorgebbaren Grenzvolumen an Flüssigkeit ein Steuerventil (100) derart ansteuert, dass es die Druckbeaufschlagung für den Betätigungskolben (78) der Rückführeinrichtung (92) freigibt.

## Claims

1. Piston accumulator, having an accumulator housing (2) and a separating piston (8) guided so as to be longitudinally movable therein, which separates a liquid side (4) from a gas side (10) in the accumulator housing (2), wherein, despite a piston seal on the separating piston (8), liquid passes unintentionally from the liquid side (4) to the gas side (10), wherein, to enlarge the volume of the gas side (10), the separating piston (8) has the shape of a shell, the inner cavity (16) of which extends from the piston crown (18) with its open end to the piston end on the gas side (10), **characterised in that**, by means of a return device (28; 92), the fluid which has passed over is at least partially returned from the gas side (10) of the accumulator housing (2) to the liquid side (4) thereof.

2. Piston accumulator according to claim 1, **characterised in that** the return device comprises a float (24; 44) guided so as to be longitudinally movable in a guide (22) of the separating piston (8), said float, floating upwards under the influence of the liquid on the gas side (10) of the accumulator housing (2), opening a path to a non-return valve (28) which, in the open state, opens a connection between this guide (22) and the liquid side (4) in the accumulator housing (2).

3. Piston accumulator according to claim 2, **characterised in that** the guide (22) for the float (24; 44) towards the gas side (10) of the accumulator housing (2) is closed by a barrier (42) for the float (24; 44) which is permeable to liquid.

4. Piston accumulator according to claim 2 or 3, **characterised in that** the float is a float ball (24) or consists of a float plate (44) which, when moving towards the non-return valve (28), is supported on a further barrier (46) having liquid passages (48) and closes these liquid passages (48).

5. Piston accumulator according to claim 1, **characterised in that** the return device comprises a control piston (50) movably guided in the separating piston (8), said control piston comprising an inner chamber (62) which can be filled by fluid that has passed over and can be moved by the action of an energy accumulator (52) into an open position in which the chamber (62) is in communication with the liquid side (4) via a non-return valve (28) blocking towards the gas side (10).

6. Piston accumulator according to claim 5, **characterised in that** the control piston (50) is movable, by abutting on the end cap (6) against the action of the energy accumulator (52), from the open position into a position in which a closing element (70, 72) located on the control piston (50) blocks the connection between the filling chamber (62) and the liquid side (4).

7. Piston accumulator according to claim 1, **characterised in that** the return device comprises an actuating piston (78) which, against the action of an associated energy accumulator (88), actuates at least one non-return valve (92), which is guided in the separating piston (8), when pressurised.

8. Piston accumulator according to claim 7, **characterised in that** the respective non-return valve (92) in the separating piston (8) has a spring-loaded control pin (96) which can be opened by the pressurised actuating piston (78) when the separating piston (8) approaches the end cap (6) of the accumulator housing (2).

9. Piston accumulator according to claim 7 or claim 8, **characterised in that** the volume of the liquid on the gas side (10) of the accumulator housing (2) can be determined by means of a sensor device (76) which, as of a predefinable limit volume of liquid, actuates a control valve (100) in such a manner that it releases the pressurisation for the actuating piston (78) of the return device (92).

## Revendications

1. Accumulateur à piston, comprenant une enveloppe (2) d'accumulateur et un piston (8) de séparation, qui y est guidé avec possibilité de se déplacer longitudinalement et qui sépare un côté (4) pour du liquide d'un côté (10) pour du gaz dans l'enveloppe (2) de l'accumulateur, dans lequel, en dépit d'une étanchéité de piston sur le piston (8) de séparation, du liquide passe de manière intempestive du côté (4) pour du liquide au côté (10) pour du gaz,
dans lequel le piston (8) de séparation a, pour agrandir le volume du côté (10) pour du gaz, la forme d'une coque, dont la cavité (16) intérieure s'étend du fond (18) du piston par son extrémité ouverte jusqu'à l'extrémité du piston du côté (10) pour le gaz, **caractérisé en ce qu'**au moyen d'un dispositif (28 ; 92) de retour, le liquide ayant passé est retourné au moins en partie du côté (10) pour le gaz de l'enveloppe (2) de l'accumulateur au côté (4) pour le liquide de celui-ci.

2. Accumulateur à piston suivant la revendication 1, **caractérisé en ce que** le dispositif de retour a un flotteur (24 ; 44), qui est guidé avec possibilité de se déplacer longitudinalement dans un guidage (22) du piston (8) de séparation et qui, sous l'influence du liquide du côté (10) pour le gaz de l'enveloppe (2) de l'accumulateur, libère en flottant un chemin vers un clapet (28) antiretour, qui à l'état ouvert dégage une liaison entre ce guidage (22) et le côté (4) pour du liquide dans l'enveloppe (2) de l'accumulateur.

3. Accumulateur à piston suivant la revendication 2, **caractérisé en ce que** le guidage (22) du flotteur (24 ; 44) est fermé vers le côté (10) pour le gaz de l'enveloppe (2) de l'accumulateur par un arrêt (42) du flotteur (24 ; 44), arrêt qui est perméable au liquide.

4. Accumulateur à piston suivant la revendication 2 ou 3, **caractérisé en ce que** le flotteur est une bille (24) flottante ou est constitué d'une plaque (44) flottante, qui, en se déplaçant en direction du clapet (28) antiretour, s'appuie sur un autre arrêt (46) ayant des passages (48) pour du liquide et ferme ces passages (48) pour du liquide.

5. Accumulateur à piston suivant la revendication 1, **caractérisé en ce que** le dispositif de retour a un piston (50) de commande, qui est guidé avec possibilité de se déplacer dans le piston (8) de séparation, qui a une chambre (62) intérieure pouvant être emplie de liquide ayant passé et qui, par l'effet d'un accumulateur (52) d'énergie, peut être mis dans une position ouverte, dans laquelle la chambre (62) communique avec le côté (4) pour du liquide, par un clapet (28) antiretour bloquant dans la direction du côté (10) pour du gaz.

6. Accumulateur à piston suivant la revendication 5, **caractérisé en ce que** le piston (50) de commande peut, par avancée sur le couvercle (6) de fermeture, à l'encontre de l'effet de l'accumulateur (52) d'énergie, passer de la position ouverte dans une position, dans laquelle un élément (70, 72) de fermeture, se trouvant sur le piston (50) de commande, bloque la liaison entre la chambre (62) de remplissage et du côté (4) pour du liquide.

7. Accumulateur à piston suivant la revendication 1, **caractérisé en ce que** le dispositif de retour a un piston (78) d'actionnement, qui, à l'encontre de l'effet d'un accumulateur (88) d'énergie lui appartenant, commande lors d'une alimentation en pression au moins un clapet (92) antiretour guidé dans le piston (8) de séparation.

8. Accumulateur à piston suivant la revendication 7, **caractérisé en ce que** le clapet (92) antiretour respectif dans le piston (8) de séparation a une broche (96) de commande, qui est soumise à l'action d'un ressort et qui, lorsque le piston (8) de séparation avance sur le couvercle (6) de fermeture de l'enveloppe (2) de l'accumulateur, peut être commandée par le piston (78) d'actionnement alimenté en pression.

9. Accumulateur à piston suivant la revendication 7 ou revendication 8, **caractérisé en ce qu'**au moyen d'un dispositif (76) capteur, le volume de liquide du côté (10) du gaz de l'enveloppe (2) de l'accumulateur peut être fixé, le dispositif capteur commandant, à partir d'un volume limite pouvant être donné à l'avance de liquide, une soupape (100) de commande, de manière à libérer l'alimentation en pression du piston (78) d'actionnement du dispositif (92) de retour.
